# EUROPÄISCHE PATENTSCHRIFT

(11) **EP 1 797 937 B1**
(45) Veröffentlichungstag und Bekanntmachung des Hinweises auf die Patenterteilung: **25.11.2009**
(21) Anmeldenummer: 05027558.5
(22) Anmeldetag: 16.12.2005
(51) Int. Cl.: B01D 45/16, B64D 13/06, F24F 3/14

(54) **Vorrichtung zur Kondensatwasserzwischenspeicherung**
Device for temporarily storing condensed water
Dispositif pour accumuler temporairement de l'eau de condensation

(43) Veröffentlichungstag der Anmeldung: 20.06.2007
(73) Patentinhaber: EADS Astrium GmbH, 81663 München (DE)
(72) Erfinder: Müller, Roland, 88046 Friedrichshafen (DE); Westermann, Helmut, 88677 Markdorf (DE); Wittkamp, Ulf, 88090 Immenstaad (DE); Lucas, Joachim, 88634 Herdwangen Schönach (DE); Bockstahler, Klaus, 88697 Bermatingen (DE); Witt, Johannes Dr., 2215 NX Voorhout (NL); Houdou, Berengere, 49000 Angers (FR)
(74) Vertreter: Meel, Thomas

(56) Entgegenhaltungen:
- EP-A- 1 170 556
- EP-A- 1 621 243
- DE-A1- 2 325 118
- SU-A1- 739 864

## Beschreibung

Die Erfindung betrifft eine Vorrichtung zur Kondensatwasserzwischenspeicherung, insbesondere zur Zwischenschaltung zwischen einem kondensierenden Wärmetauscher und einem Wasserabscheider.

Bei der Wasserabscheidung in einem kondensierenden Wärmetauscher sammelt sich Kondensatwasser zwischen den Luftlamellen des kondensierenden Wärmetauschers an. In der EP 1 170 556 B1 ist ein kondensierender Wärmetauscher beschrieben, bei der mittels einer spezifischen Kapillargeometrie eine sehr effektive Abführung des Kondensats aus der Lammellenstruktur des Wärmetauschers erreicht wird. Eine weitere Verminderung des in dem Wärmetauscher sich ansammelnden Kondensats kann mittels einer kurzzeitigen Erhöhung der durch den Wärmetauscher strömenden Luftmenge erzielt werden. Es entsteht ein kurzzeitiger (typischerweise mehrere Sekunden) Wasserschwall aus dem kondensierenden Wärmetauscher in den nachgeschalteten Wasserabscheider. Dieser Wasserschwall kann zur Überlastung des Wasserabscheiders und damit zur Abgabe von Wassertropfen in den gekühlten auskondensierten Luftvolumenstrom führen. Unter Schwerelosigkeit stellen solche frei fliegenden Wassertropfen ein erhebliches Gefahrenpotential für elektrische und elektronische Geräte dar.

Zur Überwindung dieses Problems könnte der Wasserabscheider größer ausgelegt werden, so dass auch sehr große schwallartige Kondensatmengen ohne Fehlfunktion verarbeitet werden können. Der dadurch notwendige erhöhte Platz- und Energiebedarf ist jedoch insbesondere bei Raumfahrtanwendungen nicht akzeptabel.

Die SU-A-739864 beschreibt einen Wasserabscheider für Klimaanlagen vorzugsweise für Flugzeugklimaanlagen, mit einem Drallerzeuger, einem diesen umgebendes Gehäuse und einem Abtrennkammer zum Sammeln des abgeschiedenen Wassers. Die Luft in dem Abtrennkammer wird abgesaugt und wieder in den Luftstrom eingeführt.
Ferner ist aus der DE-A-2325118 eine Befeuchtungsanlage bekannt, in der Dampfwasser zur Stelle der Kehle eines Venturis in die Luftströmung gespritzt wird.

Der Erfindung liegt die Aufgabe zugrunde, eine Vorrichtung zu schaffen, mit dem die beschriebene Überlastung des Wasserabscheiders vermieden werden kann, ohne dass eine wesentliche Erhöhung des Platz- und Energiebedarfs notwendig wird.

Diese Aufgabe wird mit der Vorrichtung nach Patentanspruch 1 gelöst. Vorteilhafte Ausführungen und Verwendungen der erfindungsgemäßen Vorrichtung sind Gegenstand von weiteren Ansprüchen.

Mit der erfindungsgemäßen Vorrichtung wird der kurzzeitig auftretende Wasserschwall durch Zwischenspeicherung des Kondensats in einen zeitlich gestreckten Schwall mit geringerem Spitzenwert überführt. Der im Wärmetauscher anfallende Kondensatstrom kann somit sicher abgeführt werden, ohne dass Wassertropfen in den gekühlten Luftstrom gelangen und ohne dass die Baugröße oder der Leistungsbedarf des Wasserabscheiders erhöht werden müssten.

Die erfindungsgemäße Vorrichtung kann bei allen kondensierenden Wärmetauschern mit Wasserabscheidern, bevorzugt für den Betrieb unter Schwerelosigkeit, eingesetzt werden.

Eine Ausführung wird anhand konkreter Ausführungsbeispiele unter Bezugnahme auf Figuren näher erläutert. Es zeigen:
- Fig. 1: die prinzipielle Anordnung der erfindungsgemäßen Vorrichtung zur Kondensatwasserzwischenspeicherung zwischen kondensierendem Wärmetauscher und Wasserabscheider;
- Fig. 2: eine Ausführung der erfindungsgemäßen Vorrichtung zur Kondensatwasserzwischenspeicherung.

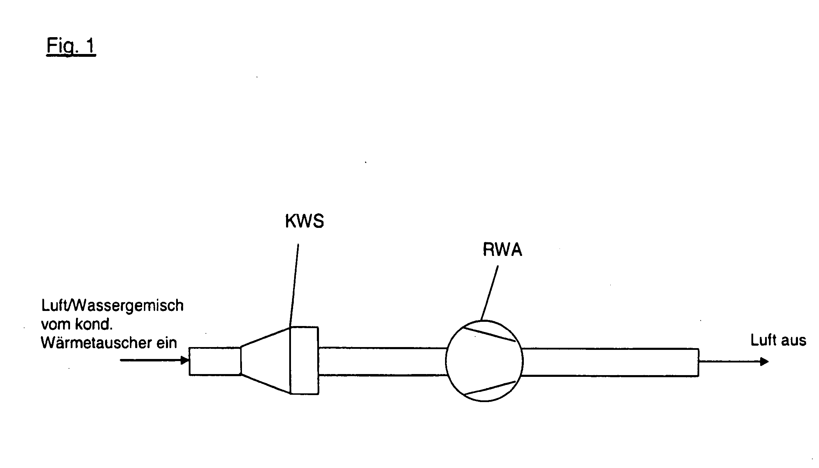

Fig. 1 zeigt die prinzipielle Anordnung der erfindungsgemäßen Vorrichtung KWS zwischen einem kondensierenden Wärmetauscher (in der Fig. nicht dargestellt) und dem zugeordneten Wasserabscheider RWA. Als kondensierender Wärmetauscher kann bevorzugt der in der EP 1 170 556 B1 beschriebene eingesetzt werden, bei dem mittels spezifischer Kapillargeometrie eine sehr effektive Abführung des Kondensats aus der Lammellenstruktur des Wärmetauschers erreicht wird. Das aus dem kondensierenden Wärmetauscher austretende Luft/Wassergemisch wird einem Wasserabscheider RWA zugeführt, mit dem die weitere Abtrennung des Wassers aus dem Luft/Wassergemisch erfolgt. Der Wasserabscheider RWA kann insbesondere als so genannter Rotations-Wasser-Abscheider ausgebildet sein. Der gekühlte, vom Wasser befreite Luftstrom verlässt den Wasserabscheider RWA und kann z.B. einem Luftstrom für die Klimatisierung bemannter geschlossener Räume zugeführt werden.

Um sicherzustellen, dass der Wasserabscheider RWA den anfallenden Kondensatstrom zu jedem Zeitpunkt, also auch bei schwallartigen Belastungen, ohne Fehlfunktion verarbeiten kann, ist dem Wasserabscheider RWA die erfindungsgemäßen Vorrichtung KWS zur Zwischenspeicherung des Kondensats vorgeschaltet.

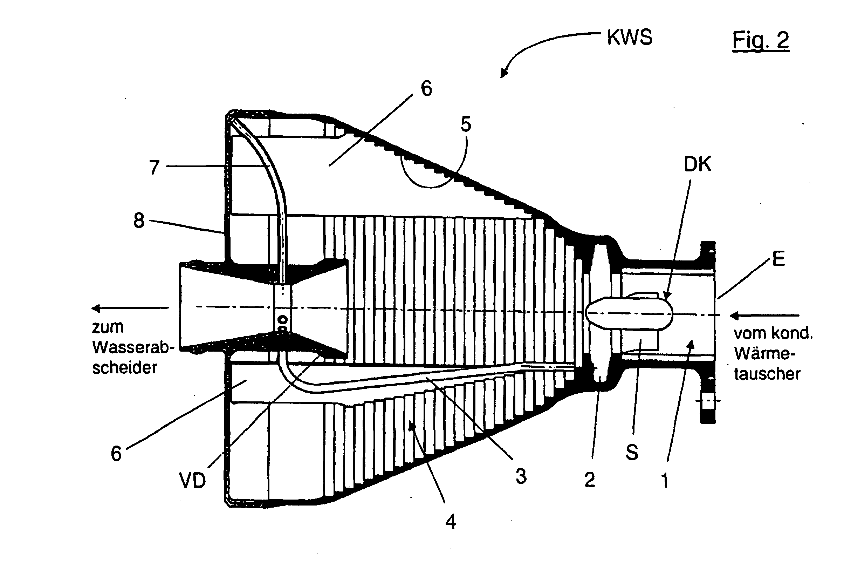

Einen axialen Schnitt durch die erfindungsgemäße Vorrichtung KWS, die in dieser Ausführung eine im wesentlichen rotationssymmetrische, konusförmige Form aufweist, zeigt Fig. 2. Das vom kondensierenden Wärmetauscher kommende Luft/Wassergemisch strömt über den Eingang E in die Vorrichtung KWS ein und verlässt die Vorrichtung über eine Venturidüse VD am gegenüberliegenden Ende. Das einströmende Luft/Wassergemisch trifft im Eingangsbereich 1, der einen konstanten Querschnitt aufweist, auf einen Drallkörper DK, der dem Luft/Wassergemisch eine Drehung aufzwingt. Der Drallkörper umfasst in dieser Ausführung vier über den Umgang verteilte Schaufeln S, von denen in Fig. 2 nur eine zu erkennen ist. Stromabwärts, hinter dem Drallkörper, weitet sich der Innendurchmesser der Vorrichtung, so dass sich eine konusförmige Aufweitungszone 4 ergibt. Aufgrund des am Drallkörper DK verliehenen Dralls sowie aufgrund der Reduktion der Strömungsgeschwindigkeit in dem vergrößerten Strömungsquerschnitt sammelt sich in der Aufweitungszone 4 Schwallwasser an, sobald ein Wasserschwall in die Vorrichtung KWS eintritt. Zur Erhöhung der Oberflächenadhäsionskraft ist die Innenoberfläche 5 der Aufweitungszone 4 nicht glatt, sondern stufenförmig ausgebildet, wobei der Winkel zwischen den beiden Schenkeln einer Stufe gerade 90 Grad beträgt. Auch andere Winkel sind möglich, insbesondere solche größer 90 Grad.

In der Aufweitungszone 4 befinden sich mehrere, gleichmäßig über den Umfang verteilte Trennbleche 6 die sich in axialer Richtung bis an die hintere Abschlusswand 8 der Vorrichtung KWS erstrecken. In der gezeigten Ausführung sind drei Trennbleche 6, jeweils um 120 Grad versetzt, vorgesehen. Der Normalenvektor der Bleche 6 steht bevorzugt senkrecht zur Hauptachse der Vorrichtung. Außerdem bilden die Trennbleche 6 mit der Innenoberfläche der Aufweitungszone bevorzugt einen rechten Winkel. Die Trennbleche 6 bremsen den Drall des Schwallwassers und der Luftströmung, binden durch Adhäsionskräfte das angesammelte Schwallwasser auf ihrer Oberfläche und leiten es durch Kapillarkräfte zur Innenoberfläche 5 der Aufweitungszone 4. Von dort wird das angesammelte Schwallwasser aufgrund der axialen Strömung des Luft/Wassergemischs und der Kapillarkraftwirkung zwischen der Innenoberfläche 5 und des Trennblechs 6 entlang der Innenoberfläche bis an das hintere Ende der Vorrichtung KWS im Bereich der Abschlusswand 8 getrieben. In diesem Bereich befinden sich die Einlässe von drei gleichmäßig über den Umfang verteilten Absaugrohren 7, die das Schwallwasser in die Venturidüse VD einleiten, so dass das Wasser in das Luft/Wassergemisch zurückgeführt wird. Diese Rückführung erfolgt jedoch aufgrund der beschriebenen Transportmechanismen mit zeitlicher Verzögerung. Im Ergebnis wird somit eine Zwischenspeicherung des Schwallwassers erzielt. Der kurzzeitig auftretende Wasserschwall wird zeitlich gestreckt, so dass der nach geschaltete Wasserabscheider vor Überlastung geschützt wird.

Im Testbetrieb hat sich gezeigt, dass auch im Normalbetrieb, d.h. außerhalb der Schwallphasen, eine Tendenz zur Ansammlung von Wasser in der Aufweitungszone besteht. Dies ist unerwünscht, da dies zu einer schwallartigen Belastung des nach geschalteten Wasserabscheiders führen kann - ein Effekt, der durch die Erfindung ja gerade vermieden werden soll. Es ist deshalb notwendig, eine stromabwärts, unmittelbar hinter dem Drallkörper angeordnete Ringnut vorzusehen, in der vor allem im Normalbetrieb (kein erhöhter Wasseranteil im einströmenden Luft/Wassergemisch) das vom Drallkörper abgelenkte Wasser gesammelt werden kann. Von dort wird es mittels Absaugrohren 3 (z.B. zwei um 180 Grad versetzte Absaugrohre) in die Venturidüse VD am Auslass der Vorrichtung abgesaugt.

## Patentansprüche

1. Vorrichtung (KWS) zur Kondensatwasserzwischenspeicherung aus einem strömenden Luft/Wassergemisch, mit folgenden Merkmalen:
- einem Drallkörper (DK) im Einlassbereich (1), welcher dem einströmenden Luft/Wassergemisch eine Drehung aufzwingt, sowie einer Venturidüse (VD), über die das Luft/Wassergemisch die Vorrichtung (KWS) wieder verlässt,
- einer stromabwärts des Drallkörpers (DK) angeordneten Ringnut (2), in der sich aufgrund des Dralls Wasser ansammelt, wobei die Absaugung des in der Ringnut (2) gesammelten Wassers über mehrere Absaugrohre (3) in die Venturidüse (VD) erfolgt,
- einer Aufweitungszone (4) mit erweitertem Strömungsquerschnitt, in der sich durch Strömungsgeschwindigkeitsreduktion und aufgrund des Dralls Schwallwasser ansammelt, wobei die Innenoberfläche (5) der Aufweitungszone (4) zur Erzeugung einer erhöhten Oberflächenadhäsionskraft stufenförmig ausgebildet ist,
- mehreren Trennblechen (6) in der Aufweitungszone (4), die den Drall bremsen und durch Adhäsionskräfte das angesammelte Schwallwasser binden und durch Kapillarkräfte zur Innenoberfläche (5) der Aufweitungszone (4) leiten,
- einer Absaugung des an den Enden der Trennbleche gesammelten Schwallwassers über Absaugrohre (7) in die Venturidüse (VD) zur verzögerten Rückführung des Schwallwassers in das Luft/Wassergemisch.

2. Verwendung der Vorrichtung nach Anspruch 1, **dadurch gekennzeichnet, dass** sie zwischen einem kondensierenden Wärmetauscher und einem Wasserabscheider (RWA) geschaltet ist.

## Claims

1. Device (KWS) for the intermediate storage of condensate water from a flowing air/water mixture, having the following features:
- a swirl body (DK) in the inlet region (1), which swirl body imparts a twist to the inflowing air/water mixture, and a Venturi tube (VD), via which the air/water mixture leaves the device (KWS) again,
- an annular groove (2) which is arranged downstream of the swirl body (DK) and in which water accumulates on account of the swirl, the suction extraction of the water collected in the annular groove (2) taking place into the Venturi tube (VD) via a plurality of suction-extraction tubes (3),
- an expansion zone (4) with a widened flow cross section, in which splashwater accumulates due to a reduction in flow velocity and on account of the swirl, the inner surface (5) of the expansion zone (4) being of stepped design in order to generate an increased surface adhesion force,
- a plurality of separating plates (6) in the expansion zone (4) which brake the swirl and which bind the accumulated splashwater by means of adhesion forces and conduct it to the inner surface (5) of the expansion zone (4) by means of capillary forces,
- a suction extraction of the splashwater collected at the ends of the separating plates into the Venturi tube (VD) via suction-extraction tubes (7) for the delayed return of the splashwater to the air/water mixture.

2. Use of the device according to Claim 1, **characterized in that** it is inserted between a condensing heat exchanger and a water separator (RWA).

## Revendications

1. Dispositif (KWS) d'accumulation temporaire de l'eau de condensation d'un mélange d'air et d'eau en écoulement, présentant les caractéristiques suivantes :
- un corps rotatif (DK) disposé dans la zone d'entrée (1) et que le mélange d'air et d'eau entrant entraîne en rotation, ainsi qu'une tuyère Venturi (VD) par laquelle le mélange d'air et d'eau quitte le dispositif (KWS),
- une rainure annulaire (2) disposée en aval du corps rotatif (DK) et dans laquelle l'eau se rassemble suite à la rotation, l'aspiration de l'eau recueillie dans la rainure annulaire (2) s'effectuant par plusieurs tubes d'aspiration (3) ménagées dans la tuyère Venturi (VD),
- une zone évasée (4) dont la section transversale d'écoulement s'agrandit et dans laquelle l'eau projetée se rassemble suite à la réduction de la vitesse d'écoulement et à la rotation, la surface intérieure (5) de la zone évasée (4) étant configurée en gradins pour exercer une plus grande force d'adhérence de surface,
- plusieurs tôles de séparation (6) disposées dans la zone évasée (4), qui freinent la rotation, qui lient par des forces d'adhérence l'eau projetée qui s'est rassemblée et la conduisent par l'action de forces capillaires vers la surface intérieure (5) de la zone évasée (4) et
- une aspiration de l'eau projetée qui s'est rassemblée aux extrémités des tôles de séparation, par des tubes d'aspiration (7) disposés dans la tuyère Venturi (VD), pour renvoyer de manière temporisée dans le mélange d'air et d'eau l'eau projetée.

2. Utilisation du dispositif selon la revendication 1, **caractérisée en ce que** le dispositif est raccordé entre un échangeur de chaleur à condensation et un séparateur d'eau (RWA).
